# EUROPEAN PATENT APPLICATION

(11) **EP 1 494 466 A2**
(43) Date of publication of application: **05.01.2005**
(21) Application number: 04388041.8
(22) Date of filing: 28.06.2004
(51) Int. Cl.: H04N 5/44

(54) **Audio-Video Adapter**

(30) Priority: 30.06.2003 DK 200300981
(71) Applicant: Nikolime ApS, Langholt, 9310 Vodskov (DK)
(72) Inventor: Sorensen, Freddy, 9310 Vodskov (DK); Sondergaard, Soren, 9520 Skorping (DK)

(57) **Abstract**

A device organized to convert an input signal to an output signal, where the converting circuit and a male plug for the output signal forms an assembly unit. The converting circuit contains the necessary electronics and software to receive, decode and play digital video and audio signals.

A male SCART plug (1) is integrated into a casing (2) containing the converting circuit. At the side of the casing (2) is shown an entry point (3) for a network cable to supply the invention with digital audio and video signals.

## Description

The presented invention concerns a device made to convert an input signal to an output signal, where the converting circuit and a male plug for the output signal builds an assembly unit. The converting circuit contains the necessary electronics and software to receive, decode and play digital audio and video signals.

The invention can be mounted directly to e.g. the SCART connector on a television, and can be used for transferring digital video and/or sound signals from a computer or server to a television.

In order to transfer sound and picture signals from a computer or server to a television today, could be used a set-top-box, a DVD player or a satellite receiver. The set-top-box is being connected to the computer by e.g. a network cable, and the set-top-box is connected to the television via a SCART cable. Both a set-top-box and a SCART cable is space consuming, and it is not always possible or convenient to place the set-top-box with a SCART cable at the television.

Alternatively analogue sound and picture signals can be transferred directly from a computer with a built-in video card to a television via a coax cable. The computer however must be placed relatively close to the television to get an acceptable sound and picture quality.

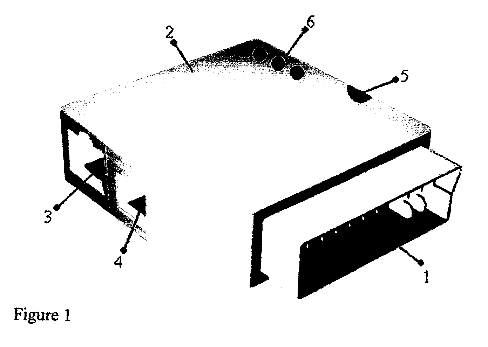

The purpose of the presented invention is, to bring a compact and space-saving solution, which is done by building together a male SCART plug (fig.1, 1) with a casing (fig.1, 2) containing the conversion circuit. The invention is connected to a computer via the entry point for a network connection (fig.1, 3).

Since the converting circuit and the male SCART plug builds an assembly unit, the invention can be connected directly into the SCART connector at the television, and as well the SCART cable as the set-top-box placed next to the television can be eliminated.

As stated in claim 2, it can be comprehensive that the conversion circuit and the male plug for the output signal are placed in a shared casing, as it results in the most compact solution. The male plug for the output signal is placed on the PCB (printed circuit board), containing the electronics for the converting circuit, and this PCB is surrounded with a shared casing in for example a composite material.

As stated in claim 3, it can be comprehensive, that the male plug for the output signal is either of the type SCART or VGA, since they are the mostly commonly used types of connectors for television and computer monitors.

As stated in claim 4, it can be comprehensive, that the device has an input connector, which allows the customer self to adjust the length and quality of the cable that provides the device with an input signal. It can also be comprehensive, that the device is provided with several input connectors, so that it is possible to prioritize between several input signals.

As stated in claim 5, it can be comprehensive, that the device is provided with a cable for the input signal, since you at some type of installations already know the demand to the length of the cable. It will for the customer mean that he does not have to worry about the cable for the input signal, when it is already mounted and supplied together with the device.

As stated in claim 6, it can be comprehensive, that the device is supplied with a plug for the output signal, which makes it possible not only via the male plug for the output signal, but also via an extra jack, to transfer e.g. sound to a stereo set.

As stated in claim 7, it can be comprehensive, that the device is supplied by a cordless communication receiver, like an IR receiver or a jack for connecting a cable with an IR receiver, since it then becomes possible to control the transfer of digital video and sound signals via a remote controller.

As stated in claim 8, it can be comprehensive, that the angle between the male plug for the output signal and the connector for the input signal is placed with a predetermined angle preferably between 80° and 135° to each other, as the device frequently is mounted in a SCART connector at the back of a television. The predetermined angle of between 80° and 135° will mean, that the cable for the input signal does not point straight back according to the television, which would be impractical due to the lack of space at the rear of a television.

As stated in claim 9, it can be comprehensive, that the device is prepared to receive an input signal via a 10 or 100 Mbit/s Ethernet connection, as this is the most widespread standard for network connections.

As stated in claim 10, it can be comprehensive, that the device is prepared to receive an input signal from a cordless WLAN connection, since it would make it possible to remove the cable for the input signal, and then make the solution even more compact and easy to install.

As stated in claim 11, it can be comprehensive, that the device is prepared to receive a signal directly from a satellite connection, since this will expand the possibilities for using the device, so that the input signal is not limited to only come from a computer or server.

As stated in claim 12, it can be comprehensive, that the device is prepared to receive a signal directly via a VHF/UHF antenna or cable-TV, since this will expand the possibilities for using the device, so that the input signal is not limited to only come from a network connection on a computer or server.

As stated in claim 13, it can be comprehensive, that the device is prepared to communicate with an external unit via an USB connection, since this will expand the possibilities for using the device, so that the input signal is not limited to come only from a network connection.

The invention is explained more closely in the following, where it refers to figure 1, which shows an example of the device seen in perspective.

At the example in fig.1 is displayed a male SCART plug (1) containing some metal pins enclosed by a metal shield to steer the plug at insertion. The male SCART plug is built into a casing (2) made of a composite material or metal, and inside the casing is the PCB (printed circuit board) or PCB's with the converting circuit. At the side of the casing (2), at an angle of 90 degrees to the position of the male SCART plug (1), is displayed the entry point (3) to a network cable which combines the invention with a computer. A jack to an output signal, e.g. sound to a stereo set, is displayed as (4). At the side of the casing stated as (5) is displayed a jack to connect a cable with a built-in IR receiver. At the side of the casing (6) is likewise displayed three diodes, which can be used to define if the device is switched on or off, if the device is receiving a signal or the operation conditions all in all.

## Claims

1. A device for converting an input signal to an output signal **characterized by** the converting circuit and the male plug for the output signal forms an assembly unit. The converting circuit contains the necessary electronics and software to receive, decode and play back digital audio and video signals.

2. A device according to previous claim **characterized by** the converting circuit and the male plug for the output signal is applied to a shared casing.

3. A device according to on of the previous claims **characterized by** the male plug for the output signal either is of the type SCART plug or VGA plug.

4. A device according to one of the previous claims **characterized by** the device item containing a connector as an input signal.

5. A device according to on of the previous claims **characterized by** the device is provided with a cable to an input signal.

6. A device according to on of the previous claims **characterized by** the device is provided with a connector to an output signal.

7. A device according to on of the previous claims **characterized by** the device is provided by a cordless communication receiver or a jack for connecting a cable with a cordless communication receiver.

8. A device according to on of the previous claims **characterized by** the male plug for the output signal and the connector for the input signal is placed by a by unspecified angle at preferably between 80° and 135° according each other.

9. A device according to on of the previous claims **characterized by** the signal into the converting circuit is received from a 10 or 100 Mbit/s Ethernet connection.

10. A device according to on of the previous claims **characterized by** the signal into the converting circuit is received via a WLAN connection.

11. A device according to on of the previous claims **characterized by** the signal into the converting circuit is received from a satellite via a satellite dish.

12. A device according to on of the previous claims **characterized by** the signal into the converting circuit is received via a VHF/UHF antenna or cable-TV.

13. Device according to on of the previous claims **characterized by** the signal into the converting circuit is received via a USB connection.
